# EUROPEAN PATENT SPECIFICATION

(11) **EP 3 577 298 B1**
(45) Date of publication and mention of the grant of the patent: **05.06.2024**
(21) Application number: 18747556.1
(22) Date of filing: 05.02.2018
(51) Int. Cl.: B32B 7/04, B32B 17/06, C03C 8/04, C03C 8/24, C03C 27/10, F24C 15/00, F24C 15/04, B32B 3/08, C03C 8/14, E06B 3/663, C03C 17/00

(54) **THERMALLY INSULATING GLASS LAMINATES WITH A PLURALITY OF GLASS SPACERS SUBMERGED IN A COATING LAYER TO FORM A SEALED CAVITY OF GAS MOLECULES**
WÄRMEISOLIERENDE GLASLAMINATE MIT EINER VIELZAHL VON IN EINER BESCHICHTUNGSSCHICHT EINGETAUCHTEN GLASABSTANDSHALTERN ZUR BILDUNG EINES ABGEDICHTETEN HOHLRAUMS VON GASMOLEKÜLEN
STRATIFIÉS DE VERRE THERMO-ISOLANTS AYANT UNE PLURALITÉ D'ÉLÉMENTS D'ESPACEMENT EN VERRE IMMERGÉS DANS UNE COUCHE DE REVÊTEMENT POUR FORMER UNE CAVITÉ ÉTANCHE DE MOLÉCULES DE GAZ

(30) Priority: 06.02.2017 US 201715425694; 25.04.2017 US 201762489820 P
(43) Date of publication of application: 11.12.2019
(73) Proprietor: SCHOTT AG, 55122 Mainz (DE)
(72) Inventor: O'RYAN, Adam, Sweetwater TN 37874 (US)
(74) Representative: Blumbach · Zinngrebe Patentanwälte PartG mbB
(86) International application number: PCT/US2018/016885
(87) International publication number: WO 2018/145017

(56) References cited:
- WO-A1-01/29357
- WO-A1-2010/132057
- FR-A1- 2 484 397
- US-A1- 2004 146 721
- US-A1- 2005 194 086
- US-A1- 2011 296 771
- US-A1- 2013 142 972
- US-A1- 2015 327 333
- US-A1- 2015 376 935
- US-B1- 6 946 171
- US-B2- 6 701 749

## Description

### BACKGROUND OF THE DISCLOSURE

### 1. Field of the Disclosure

The present disclosure relates to thermally insulating glass laminates.

### 2. Description of the Related Art

Glass laminates are used in high temperature applications as windows and sight glasses for the purpose of viewing a heated cavity. To minimize heat loss from the cavity, the laminates have multiple panes of glass with a gap between the panes to prevent direct heat transfer from the cavity to the outer pane, but the temperature of the outer pane still increases and heat escapes into the surrounding environment because of convective heat transfer through air in the gap between the panes. Heat insulating coatings have been used to prevent heat loss but many coatings are inadequate.

A light diffuser is an element that transmits visible light but minimizes the transmission of medium and long wavelength infrared light. Most light diffusers are not necessarily adequate to thermally insulate functional components such as LED's, cameras, lighting assemblies, wiring, sensors and semiconductor components from the high temperatures in residential and commercial ovens and other heated cavities. This is particularly problematic for functional components such as LED's that are not designed to withstand high temperatures. One approach to insulate a lighting assembly from the high temperatures in ovens is to provide an air gap that cools the lighting assembly by convection. Another approach is to use a heat sink. Still another approach is to shield the lighting assembly with a lens coated with a low-e coating. However, such approaches do not necessarily adequately insulate the functional elements from the high temperatures.

EP 1 630 344 A1 discloses a vacuum glazing panel comprising two sheets of glass disposed in an opposing and spaced relationship with each other with a gap formed there between, the gap being a low pressure space having a pressure less than atmospheric pressure; a hermetic seal for sealing off said low pressure space, comprising an organic material; a plurality of spacers provided between said two sheets of glass for spacing the sheets of glass from one another, comprising an organic material, wherein the distance between the two sheets and at least one of the sheets of glass is coated on at least one of its faces with a low emissivity coating layer.

WO 2010/132057 A1 discloses an oven door comprising a frame including a shroud and a pair of side rails for holding in place a glass pane; a hinge for securing the frame to an oven; and a mechanism for holding the oven door in a closed position relative to the oven, wherein the glass pane provides a full view of the interior contents of the oven when the oven door is in the closed position, wherein the glass pane is a plurality of glass panes, and the oven door further comprises a plurality of spacer bars for receiving and spacing the plurality of glass panes.

### SUMMARY OF THE DISCLOSURE

The present disclosure provides thermally insulating glass laminates that prevent heat from escaping from heated cavities and is defined by the appended claims. The thermally insulating glass laminates comprise a low or non-conductive coating layer that forms a chemical bond with at least one inner surface of the substrates, where the coating layer has a thickness of 254 microns or less ( 0.010 inches or less), and where a plurality of glass spacers is submerged in the coating layer. This arrangement creates at least one sealed three-dimensional cavity of gas molecules that exists between the substrates and around the glass spacers with a small amount of gas molecules therein. Since there is a small amount of gas molecules in the cavity, convective heat transfer between the substrates is minimized thereby minimizing heat loss through the laminates and into the surrounding environment.

Some current thermally insulating glass laminates are optimal insulators when the gas cavity has a thickness of about 15 millimeters, where thinner cavities have increased conduction losses and thicker cavities have increased convection losses. This knowledge suggests that decreasing the thickness of the cavity would increase conduction losses, but conduction losses are not increased in the current disclosure.

The thermally insulating glass laminates of the disclosure can be used for non-limiting example in high temperature applications such as windows and sight glasses in residential and commercial ovens and applications having heated cavities where low heat loss and cool outlet window temperatures are desired. In some embodiments, the high temperature applications are above about 175 °C.

The present disclosure provides a thermally insulating laminate comprising a first glass substrate having an inner surface, a second glass substrate having an inner surface; and a low or non-conductive coating layer that forms a chemical bond with at least one inner surface. The coating layer has a thickness of 254 microns or less ( 0.010 inches or less). A plurality of glass spacers is submerged in the coating layer. At least one sealed cavity of gas molecules is created between the substrates and around a portion of the glass spacers not submerged in the coating layer.

The present disclosure also relates to light diffusers that thermally insulate functional components, such as LED's, cameras, lighting assemblies, wiring, sensors and semiconductor components, in or near heated cavities. In some embodiments, the light diffuser comprises the thermally insulating glass laminate described herein. The light diffuser may have a thermally insulating glass laminate located between the oven cavity and the functional element so that the laminate partially or completely insulates the functional element from the temperature within the cavity. In some embodiments, a heat reflective coating is provided on one or more components of the laminate to provide additional heat insulation.

### BRIEF DESCRIPTION OF THE DRAWINGS

Figure 1 is a scanning electron microscope (SEM) image of a plurality of glass spheres submerged in the coating layer.
Figure 2 shows a schematic diagram of the laminate of the present disclosure.
Figure 3 shows a schematic diagram of an oven using the laminate of the present disclosure to shield a functional component.

### DETAILED DESCRIPTION OF THE DISCLOSURE

The present disclosure provides thermally insulating glass laminates that prevent heat from escaping from heated cavities. The thermally insulating glass laminates comprise a first glass substrate having an inner surface, a second glass substrate having an inner surface, and a low or non-conductive coating layer that forms a chemical bond with at least one inner surface, wherein the coating layer has a thickness of 254 microns or less (0.010 inches or less), wherein a plurality of glass spacers is submerged in the coating layer, and wherein at least one sealed cavity of gas molecules is created between the substrates and around the glass spacers.

The glass spacers can comprise without limitation about 100 to about 700, or about 400 spacers per square millimeter of the coating layer. The spacers can have a width of about 10 to about 50 microns. The glass spacers should prevent the substrates from touching. The glass spacers should be submerged in the coating layer without contacting the substrates to minimize conductive heat transfer through the glass spacers, but if the glass spacers do contact one of more of the substrates, the glass spacers should only contact the substrates at tangent points of the glass spacers. The term "submerged" means that a portion of the height of the glass spacers, such as for non-limiting example about 1/3 or less, is embedded within or in contact with the coating layer for purposes of bonding the glass spacers to the coating layer, while the remainder of the height of the glass spacers, such as for non-limiting example the remaining about 2/3 or more, protrudes above the coating layer to contact the other substrate or a layer therebetween. The sealed cavities are created between the substrates and "around" the portion of the glass spacers that are not submerged in the coating layer. That is, the cavities are bounded by an inner surface of substrates, the spacers, and the coating layer, in which a portion of the spacers are submerged.

The glass spacers can be solid or hollow and may comprise without limitation glass spheres, glass columns, glass filaments, any other glass shapes, and any combination thereof. One of the purposes of the glass spacers is to provide a gap between the substrates to trap gas molecules in at least one sealed cavity created between the substrates and around the glass spacers or between the coating layer, the opposite substrate or layer therebetween, and around the glass spacers. Since the glass spacers might contact at least one substrate, the glass spacers should comprise a material having a low or non-conductivity. The glass spacers in some embodiments have a height that is greater than the thickness of the coating layer so that the glass spacers protrude from the coating layer to help form at least one sealed cavity of gas molecules around the glass spacers and between the substrates or the layers therebetween. In some embodiments, the glass spacers contact one or more of the substrates or layers therebetween. In some embodiments, the height of the glass spacers is at least twice the thickness of the coating layer.

The glass spacers in some embodiments are submerged in about 30% or less of the surface area of the coating layer, about 20% or less of the surface area of the coating layer, about 10% of less of the surface area of the coating layer, or about 5% or less of the surface area of the coating layer. In other words, the coating layer with the glass spacers submerged therein is applied to a substrate with the glass spacers being in a uniform or a non-uniform pattern across the coating layer, wherein about 30% or less, about 20% or less, about 10% or less, or about 5% or less of the surface area of the coating layer has glass spacers submerged therein (i.e. the cavity or cavities contact about 70% or more, about 80% or more, about 90% or more, or about 95% or more of one or more of the inner surfaces of the substrates).

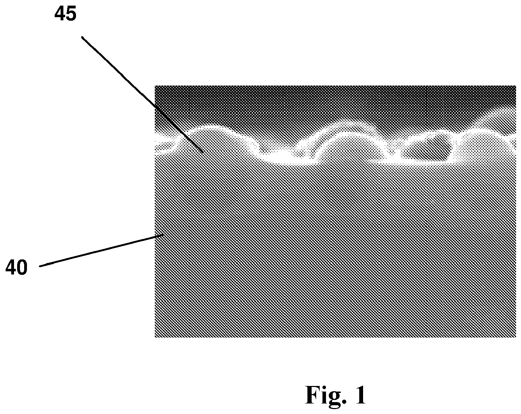

Figure 1 shows a plurality of glass spacers 45 submerged in the coating layer 40. At least one sealed cavity of gas molecules is created in the empty space between the coating layer, the glass spacers, the lower substrate, the upper substrate (not shown) and the perimeter edges of the coating layer (not shown). In all embodiments, there may be one large sealed cavity or a plurality of smaller sealed cavities that contains the gas in the space between the substrates and around the glass spacers. In addition, if the glass spacers are hollow, there would also be a sealed cavity within each glass spacers itself, but this sealed cavity differs from the sealed cavities created between the substrates and around the glass spacers.

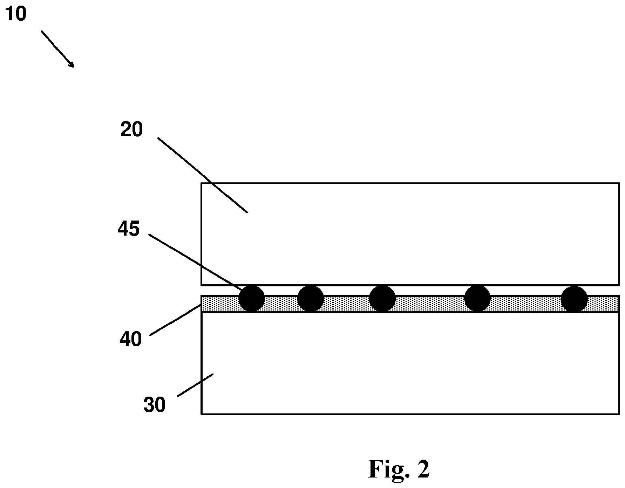

Fig. 2 shows a schematic drawing of laminate 10 of the present disclosure. Laminate 10 has first glass substrate 20, second glass substrate 30, and coating 40. Coating 40 has glass spacers 45 embedded therein, in the manner described above. As previously discussed, there are cavities formed around spacers 45, and in between substrates 20 and 30. In the shown embodiment, spacers 45 contact substrate 20, but as described above, the present disclosure contemplates that spacers 45 do not contact either of substrates 20 or 30.

The conductivity of the coating layer and/or glass spacers is about 5 W/(m·K) or less or about 3.5 W/(m·K) or less. In some embodiments, the conductivity of the coating layer and/or glass spacers is lower than the conductivity of the substrates that contact the coating composition. For purposes of the current disclosure, a "low conductive" coating layer and/or glass spacer has a conductivity of about 5 W/(m·K) or less and a "non-conductive" coating layer and/or glass spacer has a conductivity of 0 or about 0 W/(m·K).

The coating layer having the submerged glass spacers helps create an insulating layer between the substrates to minimize convective currents and reduce heat transfer between the substrates. In some embodiments, the coating layer is a low or non-conductive coating layer formed from a coating composition, such as for non-limiting example an enamel, a frit, or a combination thereof, comprising a ceramic compound, a glass compound or a combination thereof, optionally with other compounds, some of which may evaporate when curing the coating composition to form the coating layer. In certain embodiments, the ceramic and glass compounds in the coating layer have a similar composition and thermal expansion properties compared to the substrate that contacts the coating layer.

The coating composition can comprise a frit, which is a mixture of inorganic chemical substances produced by rapidly quenching a molten, complex combination of materials, and confining the chemical substances thus manufactured as non-migratory components of glassy solid flakes or granules. Frits include for non-limiting example all of the chemical substances specified below when they are intentionally manufactured in the production of the frit. The primary members include without limitation oxides of some or all of the elements listed below, where fluorides of these elements may also be included: aluminum, antimony, arsenic, barium, bismuth, boron, cadmium, calcium, cerium, chromium, cobalt, copper, gold, iron, lanthanum, lead, lithium, magnesium, manganese, molybdenum, neodymium, nickel, niobium, phosphorus, potassium, silicon, silver, sodium, strontium, tin, titanium, tungsten, vanadium, zinc, zirconium, and combinations thereof. The most common frits are bismuth and zinc based frits. The frits may comprise pigments added in small percentages for color purposes.

A non-limiting example of a suitable coating composition is:
Crystalline Silica: 11-15%
Borates: 19-22%
Zinc Oxide: 25-29%
Titanium Dioxide: 32-36%
Manganese Compound: 0-2%
Iron Oxide: 0-2%
Chromium Compound: 0-2%
Cobalt Compound: 0-3%
Alumina: 3-6%

Another non-limiting example of a suitable coating composition is:
Crystalline Silica: 34-38%
Borates: 8-12%
Zinc Oxide: 16-20%
Titanium Dioxide: 5-9%
Manganese Compound: 0-3%
Iron Oxide: 0-3%
Chromium Compound: 11-15%
Copper Compound: 8-12%

The glass spacers can be submerged in the coating composition before the coating composition is applied to a substrate. The coating layer with the glass spacers submerged therein may be applied to the substrate by silk screening or any other suitable technique. When silk screening for example, the coating composition with the glass spacers is injected through the screen and applied to the substrate so that the glass spacers are submerged within the coating layer. This arrangement helps produce at least one sealed cavity of gas molecules around the glass spacers and between the substrates or layers therebetween. The coating layer can be transparent or colored. Intermediate layers, additional substrates and additional coating layers may be present as desired.

The laminates can be formed by chemically bonding the coating layer to one or more of the substrates in any manner known to those skilled in the art. For a non-limiting example, the laminates can be formed by steps comprising applying the coating composition with the glass spacers to a first substrate, heating the coating composition to adhere the coating composition to the substrate, applying a second substrate on the heated coating composition, and firing the heated coating composition to form a chemical bond between the coating layer and one or more of the substrates. In other embodiments, the laminates are formed by steps comprising applying the coating composition with the glass spacers to a first substrate, applying a second substrate on the coating composition, then firing the coating composition to form a chemical bond between the coating layer and one or more of the substrates. In all embodiments, one or more of the coating layers, the first substrate, the second substrate and the glass spacers can form a chemical bond with the one or more of the others.

The coating layers of the disclosure, at least the coating layer that touches the substrate, is pyrolytic because the coating layer is chemically bonded to the substrate by sharing an oxygen atom and becoming part of the Si-O-X chain. Pyrolytic coatings are "hard" coatings and differ from "soft" coatings like paint that are mechanically adhered to a substrate. Pyrolytic coatings compared to adhered coatings have superior wear resistance, do not easily scratch off, and typically do not require protective topcoats. The pyrolytic coatings of the disclosure can be applied in any manner known to those skilled in the art, such as by deposition using a high temperature plasma process or silk screening.

The term "glass" as used herein includes glass and glass-ceramics, including but not limited to soda lime, borosilicate, lithium aluminosilicate, and combinations thereof. The term "substrate" signifies a platform to which the coatings described herein and other elements can be applied. The substrates are not limited in shape. The substrates may be flat, curved, concave or convex, and may have rectangular, square or other dimensions. In some embodiments, the substrate comprises a glass material and have a thickness of about 1 to about 10 mm or about 2 to about 5 mm.

In some embodiments, the coating layer has a thickness of 254 microns or less, 127 microns or less, or 25.4 microns or less (0.010 inches or less, about 0.005 inches or less, or about 0.001 inches or less). This thickness refers to the coating layer itself, and not any glass spacers or portions thereof that may protrude from the top of the coating layer. It is desirable to form a coating layer having such a small thickness and to use a low or non-conductive coating composition to minimize conductive heat transfer. The coating layer at these small thicknesses in combination with the glass spacers helps produce one or more sealed three-dimensional cavities each having a very small volume with a small amount of gas molecules therein. The perimeter edges of the coating layer may have an increased thickness to help form the sealed cavity, for non-limiting example by using a high temperature epoxy, silicon or glue, each of which may form a mechanical bond with the substrates instead of a chemical bond. Since there is a small amount of gas molecules in each cavity, convective heat transfer between the substrates is minimized thereby minimizing heat loss through the laminates into the surrounding environment. The cavities essentially act as thermal insulators. The gas can be air or an inert gas. In some embodiments, there is a partial or complete vacuum in the cavities. In other embodiments, there is no vacuum.

The present disclosure also relates to light diffusers that thermally insulate functional components, such as LED's, cameras, lighting assemblies, wiring, sensors and semiconductor components, in or near heated cavities. In some embodiments, the light diffuser comprises a thermally insulating glass laminate described herein. The light diffuser may have a thermally insulating glass laminate located between the oven cavity and the functional element so that the laminate partially or completely insulates the functional element from the temperature within the cavity. In some embodiments, a heat reflective coating is provided on one or more components of the laminate to provide additional heat insulation.

Unlike lenses with or without low-e coatings, the thermally insulating laminates disclosed herein are visibly transparent, similar to a window or a site glass, since they do not significantly distort the image of the element behind the laminate. As a result, the laminates can be used as light diffusers to thermally insulate functional elements in or near an oven for example while also providing sufficient transmission of visible light to permit a camera or other functional element to view the contents of the cavity through the laminate.

The light diffusers and functional elements can be located anywhere within the heated cavity, such as at the rear, side or top for example. In some embodiments, the light diffuser is parallel to one of the six sides of the oven cavity, such as within the perimeter of such side, in a similar manner to an oven window in the front door of an oven, so that the light diffuser is located between the center of the oven cavity and the functional element.

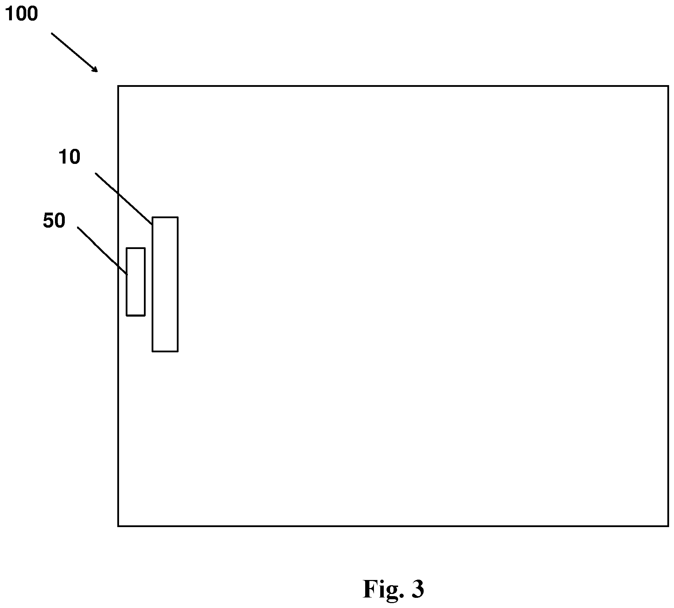

In Figure 3, a schematic of an oven interior 100 comprising laminate 10, which shields functional component 50. In the shown embodiment, laminate 10 is parallel to and adjacent to one of the sides of interior 100, and shields component 50 from heat. As previously discussed, other locations for laminate 10 and component 50 are contemplated by the present disclosure.

While the present disclosure has been described with reference to one or more particular embodiments, it will be understood by those skilled in the art that various changes may be made and equivalents may be substituted for elements thereof without departing from the scope thereof. In addition, many modifications may be made to adapt a particular situation or material to the teachings of the disclosure without departing from the scope thereof. Therefore, it is intended that the disclosure not be limited to the particular embodiment(s) disclosed as the best mode contemplated for carrying out this disclosure. The ranges disclosed herein include all subranges therebetween.

## Claims

1. A thermally insulating laminate comprising:
a first glass substrate having an inner surface;
a second glass substrate having an inner surface; and
a coating layer that forms a chemical bond with at least one inner surface, wherein the coating layer has a thermal conductivity of less than 5 W/(m-K) and a thickness of 254 microns or less (0.010 inches or less),
a plurality of glass spacers that are submerged in the coating layer, and
at least one sealed cavity of gas molecules is between the first and second substrates and around a portion of the glass spacers not submerged in the coating layer.

2. The laminate of claim 1, wherein the glass spacers comprise 100 to 700 spacers per square millimeter of the coating layer with a width of 10 to 50 microns

3. The laminate of claim 1, wherein the thickness of the coating layer is 127 microns or less (0.005 inches or less).

4. The laminate of claim 1, wherein the coating layer has a surface area that is 30% or less of the glass spacers submerged therein.

5. The laminate of claim 1, wherein one third or less of each of the plurality of glass spacers is submerged.

6. A method of forming the laminate of claim 1, comprising the steps of:
applying a coating composition with the glass spacers to the first substrate;
heating the coating composition to adhere the coating composition to the first substrate;
applying the second substrate on the heated coating composition; and
firing the heated coating composition to form the chemical bond.

7. A method of forming the laminate of claim 1, comprising the steps of:
applying a coating composition with the glass spacers to the first substrate;
applying the second substrate on the coating composition; and
firing the coating composition to form the chemical bond.

8. The laminate of claim 1, wherein the coating layer is an enamel or a frit comprising a ceramic compound, a glass compound, or a combination thereof.

9. The laminate of claim 1, wherein the coating layer has a conductivity lower than a conductivity of the first and second substrates.

10. The laminate of claim 1, wherein there is no vacuum in the cavities.

11. An oven comprising the laminate of claim 1, wherein the oven operates at a temperature above 175 °C.

12. The oven of claim 12, wherein a window or sight glass of the oven comprises the laminate.

13. An oven comprising:
a light diffuser; and
a functional element in or near the oven, wherein the light diffuser thermally insulates the functional element, transmits visible light, and minimizes transmission of medium and long wavelength infrared light,
wherein the light diffuser comprises the laminate of claim 1.

14. The oven of claim 14, wherein the element is an element selected from the group consisting of: an LED, a camera, a lighting assembly, wiring, a sensor, a semiconductor component, and any combination thereof.

## Patentansprüche

1. Wärmeisolierendes Laminat, umfassend:
ein erstes Glassubstrat mit einer Innenseite,
ein zweites Glassubstrat mit einer Innenseite und
eine Beschichtungsschicht, die mit mindestens einer Innenseite eine chemische Bindung ausgebildet hat, wobei die Beschichtungsschicht eine Wärmeleitfähigkeit von weniger als 5 W/(m·K) und eine Dicke von 254 Mikrometern oder weniger (0,010 Zoll oder weniger) aufweist,
eine Vielzahl von Glasabstandshaltern, die in die Beschichtungsschicht eingetaucht sind, und
wobei mindestens ein abgedichteter Hohlraum mit Gasmolekülen zwischen dem ersten und dem zweiten Substrat und um einen Teil der Glasabstandshalter herum nicht in die Beschichtungsschicht eingetaucht ist.

2. Laminat nach Anspruch 1, wobei die Glasabstandshalter 100 bis 700 Abstandshalter pro Quadratmillimeter der Beschichtungsschicht mit einer Breite von 10 bis 50 Mikrometern umfassen.

3. Laminat nach Anspruch 1, wobei die Dicke der Beschichtungsschicht 127 Mikrometer oder weniger (0,005 Zoll oder weniger) beträgt.

4. Laminat nach Anspruch 1, wobei die Beschichtungsschicht eine Oberfläche aufweist, die 30 % oder weniger der darin eingetauchten Glasabstandshalter ausmacht.

5. Laminat nach Anspruch 1, wobei die Vielzahl von Glasabstandshaltern jeweils zu einem Drittel oder weniger eingetaucht sind.

6. Verfahren zur Ausbildung des Laminats nach Anspruch 1, mit folgenden Schritten:
Aufbringen einer Beschichtungszusammensetzung mit den Glasabstandshaltern auf das erste Substrat,
Erhitzen der Beschichtungszusammensetzung, um ein Anhaften der Beschichtungszusammensetzung an dem ersten Substrat zu bewirken,
Aufbringen des zweiten Substrats auf die erhitzte Beschichtungszusammensetzung und
Einbrennen der erhitzten Beschichtungszusammensetzung, um die chemische Bindung auszubilden.

7. Verfahren zur Ausbildung des Laminats nach Anspruch 1, mit folgenden Schritten:
Aufbringen einer Beschichtungszusammensetzung mit den Glasabstandshaltern auf das erste Substrat,
Aufbringen des zweiten Substrats auf die Beschichtungszusammensetzung und
Einbrennen der Beschichtungszusammensetzung, um die chemische Bindung auszubilden.

8. Laminat nach Anspruch 1, wobei die Beschichtungsschicht eine Emaille oder eine Fritte ist, die eine Keramikverbindung, eine Glasverbindung oder eine Kombination dieser umfasst.

9. Laminat nach Anspruch 1, wobei die Beschichtungsschicht eine Leitfähigkeit aufweist, die niedriger ist als die Leitfähigkeit des ersten und des zweiten Substrats.

10. Laminat nach Anspruch 1, wobei in den Hohlräumen kein Unterdruck vorhanden ist.

11. Ofen umfassend das Laminat nach Anspruch 1, wobei der Ofen bei einer Temperatur von mehr als 175 °C betrieben wird.

12. Ofen nach Anspruch 12, wobei ein Fenster oder Sichtglas des Ofens das Laminat umfasst.

13. Ofen, umfassend:
einen Lichtdiffusor und
ein Funktionselement in dem Ofen oder in dessen Nähe, wobei der Lichtdiffusor das Funktionselement thermisch isoliert, sichtbares Licht durchlässt und den Durchlass von mittel- und langwelligem Infrarotlicht minimiert,
wobei der Lichtdiffusor das Laminat nach Anspruch 1 umfasst.

14. Ofen nach Anspruch 14, wobei das Element ein Element ist, das ausgewählt ist aus der Gruppe bestehend aus: einer LED, einer Kamera, einer Beleuchtungsbaugruppe, Verkabelung, einem Sensor, einem Halbleiterbauelement und einer beliebigen Kombination dieser.

## Revendications

1. Stratifié thermiquement isolant, comprenant :
un premier substrat en verre présentant une surface interne ;
un second substrat en verre présentant une surface interne ; et
une couche de revêtement qui forme une liaison chimique avec au moins une surface interne, la couche de revêtement présentant une conductivité thermique de moins de 5 W/(m.K) et une épaisseur de 254 micromètres ou moins (0,010 pouce ou moins),
une pluralité d'éléments d'espacement en verre qui sont immergés dans la couche de revêtement, et
au moins une cavité scellée constituée de molécules de gaz située entre les premier et second substrats et autour d'une partie des éléments d'espacement en verre non immergée dans la couche de revêtement.

2. Stratifié selon la revendication 1, dans lequel les éléments d'espacement en verre comprennent de 100 à 700 éléments d'espacement par millimètre carré de la couche de revêtement ayant une largeur de 10 à 50 micromètres.

3. Stratifié selon la revendication 1, dans lequel l'épaisseur de la couche de revêtement est de 127 micromètres ou moins (0,005 pouce ou moins).

4. Stratifié selon la revendication 1, dans lequel la couche de revêtement a une aire de surface de 30 % ou moins qui est constituée des éléments d'espacement en verre immergés dedans.

5. Stratifié selon la revendication 1, dans lequel un tiers ou moins de chaque élément d'espacement de la pluralité d'éléments d'espacement en verre est immergé.

6. Procédé de formation du stratifié selon la revendication 1, comprenant les étapes consistant à :
appliquer une composition de revêtement comportant les éléments d'espacement en verre sur le premier substrat ;
chauffer la composition de revêtement pour faire adhérer la composition de revêtement au premier substrat ;
appliquer le second substrat sur la composition de revêtement chauffée ; et
cuire la composition de revêtement chauffée pour former la liaison chimique.

7. Procédé de formation du stratifié selon la revendication 1, comprenant les étapes consistant à :
appliquer une composition de revêtement comportant les éléments d'espacement en verre sur le premier substrat ;
appliquer le second substrat sur la composition de revêtement ; et
cuire la composition de revêtement pour former la liaison chimique.

8. Stratifié selon la revendication 1, dans lequel la couche de revêtement est un émail ou une fritte comprenant un composé céramique, un composé verre, ou une combinaison de ceux-ci.

9. Stratifié selon la revendication 1, dans lequel la couche de revêtement présente une conductivité inférieure à une conductivité des premier et second substrats.

10. Stratifié selon la revendication 1, dans lequel il n'y a aucun vide dans les cavités.

11. Four comprenant le stratifié selon la revendication 1, le four fonctionnant à une température supérieure à 175 °C.

12. Four selon la revendication 12, dans lequel une fenêtre ou un verre de regard du four comprend le stratifié.

13. Four comprenant :
un diffuseur de lumière ; et
un élément fonctionnel dans le four ou près du four, le diffuseur de lumière isolant thermiquement l'élément fonctionnel, transmettant la lumière visible, et réduisant au minimum la transmission de lumière infrarouge de moyennes et grandes longueurs d'onde,
dans lequel le diffuseur de lumière comprend le stratifié de la revendication 1.

14. Four selon la revendication 14, dans lequel l'élément est un élément sélectionné dans le groupe comprenant : une DEL, une caméra, un ensemble d'éclairage, un câblage, un capteur, un composant à semi-conducteur, et n'importe quelle combinaison de ceux-ci.
